# EUROPÄISCHE PATENTSCHRIFT

(11) **EP 2 650 849 B1**
(45) Veröffentlichungstag und Bekanntmachung des Hinweises auf die Patenterteilung: **07.07.2021**
(21) Anmeldenummer: 13153551.0
(22) Anmeldetag: 31.01.2013
(51) Int. Cl.: G08B 13/19, G01J 5/02, G01J 5/04, G01J 5/08, G01J 5/00, H02G 3/20, H02G 3/12

(54) **Einbau-Passiv-Infrarot-Sensorvorrichtung**
Built-in passive infrared sensor device
Dispositif à capteur infrarouge à montage passif

(30) Priorität: 13.04.2012 DE 202012101356 U
(43) Veröffentlichungstag der Anmeldung: 16.10.2013
(73) Patentinhaber: Steinel GmbH, 33442 Herzebrock (DE)
(72) Erfinder: Sehlhoff, Stefan, 33442 Herzebrock-Clarholz (DE)
(74) Vertreter: Müller Hoffmann & Partner

(56) Entgegenhaltungen:
- EP-A1- 1 278 051
- EP-A1- 2 259 238
- None

## Beschreibung

Die Erfindung betrifft eine Einbau-Passiv-Infrarot-Sensorvorrichtung zum Einsatz als Bewegungs- und/oder Präsenzmelder gemäß Anspruch 1. Insbesondere betrifft die Erfindung eine Unterputz-PIR-Sensorvorrichtung.

PIR-Sensorvorrichtungen als Bewegungsmelder und/oder als Präsenzmelder sind hinreichend bekannt. Diese im Regelfall als Aufputz-Sensorvorrichtungen ausgebildeten Geräte haben meist einen kreisrunden oder geometrisch nicht definierten Erfassungsbereich, wodurch es insbesondere in großen Räumen oder langgestreckten Fluren problematisch ist, den Raum möglichst lückenlos in unterschiedliche Erfassungsbereiche aufzuteilen, ohne dass sich die Erfassungsbereiche der zur Überwachung des Raumes bzw. Flures notwendigen Mehrzahl von Sensorvorrichtungen in großen Teilbereichen überschneiden. Hierdurch ist es schwierig eine definierte ortsabhängige Aktivierung unterschiedlicher Verbraucher zu realisieren.

Aus der EP 1 278 051 A1 ist eine ein rundes Gehäuse umfassende Sensorvorrichtung bekannt, die eine Flächenlinsenanordnung aufweist, die so ausgebildet ist, dass ein in einer Erfassungsebene liegender Erfassungsbereich mit einer im Wesentlichen konstanten räumlichen Auflösung überwacht werden kann.

Die EP 2 259 238 A1 beschreibt eine ein quadratisches Gehäuse umfassende Sensorvorrichtung, wobei durch vier PIR-Sensoreinheiten ein Erfassungsbereich mit stufigen bzw. zackigen Hüllkonturkanten überwacht wird, der sich durch eine Mehrzahl von Erfassungsteilbereichen zusammensetzt. Hierbei entstehen überlappende Bereiche, die in wenigstens zwei Erfassungsteilbereichen von zwei PIR-Sensoreinheiten der Sensorvorrichtung liegen.

Ausgehend von diesem Stand der Technik liegt der Erfindung die Aufgabe zugrunde, eine verbesserte PIR-Sensorvorrichtung anzugeben, mittels derer große Flächen möglichst lückenlos überwachbar sind, wobei die Sensorvorrichtung vorzugsweise möglichst einfach montierbar bzw. ausrichtbar sein soll. Gleichzeitig soll die Sensorvorrichtung ästhetisch ansprechend, d.h. in einem vom Betrachter erfassbaren Bereich möglichst flach ausgestaltet sein.

Diese Aufgabe wird mit einer Einbau-Passiv-Infrarot-Sensorvorrichtung, insbesondere einer Unterputz-PIR-Sensorvorrichtung, mit den Merkmalen des Anspruchs 1 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt zunächst der Gedanke zugrunde, die mehrere Einzellinsen und/oder Linsenabschnitte aufweisende, noch weiter bevorzugt als Kunststoffspritzgussteil ausgebildete Flächenlinsenanordnung derart auszubilden bzw. zu berechnen, dass von dieser ein in einer, vorzugsweise in einer Parallelebene zur Flächenerstreckung der Flächenlinsenanordnung und mit Abstand zu dieser angeordneten, Erfassungsebene angeordneter Erfassungsbereich überwachbar ist, der eine Hüllkontur mit mindestens zwei zueinander parallelen Hüllkonturkanten aufweist. Bevorzugt ist die Flächenlinsenanordnung derart ausgebildet, dass dieser Erfassungsbereich eine Hüllkontur aufweist, insbesondere eine Waben- bzw. Sechseckkontur, eine Rechteckkontur oder besonders bevorzugt eine Quadratkontur, die es ermöglicht, eine große Fläche lückenlos in mehrere derartige Erfassungsbereiche zu unterteilen, ohne dass sich die Erfassungsbereiche überschneiden müssen, um zu gewährleisten, dass Bewegungen in definierten Bereichen definierte detektionspositionsabhängige Aktivierungen von durch die Sensorvorrichtung aktivierbaren Verbrauchern zur Folge hat.

Damit nun ein Monteur eine Sensorvorrichtung mit einem derart beschaffenen Erfassungsbereich einfach montieren kann, ist erfindungsgemäß vorgesehen, dass sich die zwei parallelen ersten Hüllkonturkanten (im verkleinerten Maßstab) am Gehäuse als zwei parallele erste Gehäusekonturabschnitte, insbesondere Gehäuseumfangskonturabschnitte, wiederfinden, wobei diese zwei parallelen ersten, bevorzugt in einer gemeinsamen Querschnittsebene angeordneten Gehäusekonturabschnitte, die beispielsweise von zwei parallelen Gehäuseseitenflächen und/oder von zwei parallelen Gehäuseseitenkanten gebildet sind, parallel zu den ersten Hüllkonturkanten ausgerichtet sind, so dass die Lage der Erfassungsebene an der Gehäusekontur der Sensorvorrichtung ablesbar ist, so dass der Monteur durch Ausrichten des Gehäuses unmittelbar den Erfassungsbereich ausrichten und diese Ausrichtung an der Gehäuseausrichtung erkennen kann. Damit das weitere Aufgabenkriterium der Ausbildung einer ästhetisch ansprechenden Sensorvorrichtung erfüllt werden kann, ist vorgesehen, die Sensorvorrichtung als Einbau-Passiv-Infrarot-Sensorvorrichtung, insbesondere als Unterputz-PIR-Sensorvorrichtung, auszubilden, deren Gehäuse zumindest abschnittsweise, insbesondere größtenteils mit einem Einbauabschnitt in oder hinter einer Decken- oder Wandmontageöffnung, vorzugsweise aufweisend ein Standard-Durchmesser von 50 mm, versenkbar ist, so dass sichtbar auf der Decke oder Wand lediglich ein Sichtabschnitt verbleibt, der dann eine sehr geringe Höhenerstreckung aufweisen kann, so dass zumindest für den Betrachter der Eindruck entsteht, der gesamte Sensor habe eine extrem flache Ausgestaltung. Die mindestens eine, vorzugsweise ausschließlich eine PIR-Sensoreinheit, die mit Abstand zu der Flächenlinsenanordnung angeordnet werden muss, befindet sich vorzugsweise in dem versenkbaren Einbauabschnitt, so dass der notwendiger Weise zur Flächenlinsenanordnung einzuhaltende Brennweitenabstand die Höhenerstreckung des Sichtabschnittes, gemessen senkrecht zur Decke oder Wand, nicht negativ beeinflusst. Die Erfassungsebene, in welcher der Erfassungsbereich angeordnet ist, ist beabstandet von der Sensorvorrichtung, insbesondere über eine typische Raumhöhe aus einem Bereich zwischen 2 und 5 m, und parallel zu der Montagefläche (Decke oder Wand) und damit parallel zur Anlagefläche des Sichtabschnittes, mit welcher dieser an der Decke oder Wand anliegen kann, ausgerichtet.

In Weiterbildung der Erfindung ist mit Vorteil vorgesehen, dass der Erfassungsbereich neben den ersten parallelen Hüllkonturkanten zweite, winklig, vorzugsweise rechtwinklig zu den ersten parallelen Hüllkonturkanten angeordnete parallele Hüllkonturkanten aufweist, die sich bevorzugt ebenfalls (in verkleinertem Maßstab) in der Gehäusekontur des Sensorgehäuses wiederfinden, wobei die korrespondierenden parallelen, bevorzugt in einer gemeinsamen Querschnittsebene angeordneten, zweiten Gehäusekonturabschnitte parallel zu den zweiten Hüllkonturkanten des Erfassungsbereichs ausgerichtet sind.

Erfindungsgemäß ist eine Ausführungsform, bei der die Gehäusekontur, insbesondere die Gehäuseumfangskontur zumindest eines Gehäuseabschnittes des Sensorgehäuses, insbesondere des Sichtabschnittes und/oder des Einbauabschnittes (im verkleinerten Maßstab), zumindest näherungsweise der Hüllkontur des Erfassungsbereichs in der Erfassungsebene entspricht, wobei die Gehäuseumfangskontur zu der Hüllkontur des Erfassungsbereichs ausgerichtet ist, derart, dass die Orientierung der Hüllkontur des Erfassungsbereichs der Orientierung der Gehäuseumfangskontur entspricht. Anders ausgedrückt sind die einander entsprechenden (maßstäblich unterschiedlichen) Konturabschnitte von Gehäuse und Erfassungsbereich zueinander parallel ausgerichtet. Erfindungsgemäß ist die Gehäuseumfangskontur, ebenso wie die Hüllkontur des Erfassungsbereichs, wabenförmig, rechteckig oder quadratisch, also derart, dass durch Aneinandersetzen unterschiedlicher (gleicher) Erfassungsbereiche eine große Fläche lückenlos abdeckbar ist, ohne dass sich dazu die Erfassungsbereiche überschneiden müssen, so dass wiederum definierte Aktivierungen unterschiedlicher, den Erfassungsbereichen zugeordneter Sensorvorrichtungen gewährleistet sind.

Im Hinblick auf die Anordnung der ersten und/oder zweiten Gehäusekonturabschnitte, die sich vorzugsweise in einer gemeinsamen Querschnittsebene des Gehäuses befinden, gibt es verschiedene Möglichkeiten, wobei es besonders bevorzugt ist, wenn sich erste und zweite Gehäusekonturabschnitte (vorzugsweise in einer gemeinsamen Querschnittsebene) am Sichtabschnitt befinden, wobei zusätzlich oder alternativ auch eine Anordnung derartiger Gehäusekonturabschnitte am Einbauabschnitt möglich ist, wobei in diesem Fall nur bei der Montage die Ausrichtung des Erfassungsbereichs an der Gehäusekontur ablesbar ist, da der Einbauabschnitt im montierten Zustand in der Montageöffnung versenkt ist. Das Gleiche gilt auch für den Fall, dass die Gehäuseumfangskontur zumindest näherungsweise der Hüllkontur (Umfangshüllkontur) des Erfassungsbereichs entspricht. Der diese Umfangskontur aufweisende Gehäuseabschnitt kann am Einbauabschnitt und/oder am Sichtabschnitt vorgesehen werden, wobei die Anordnung am Sichtabschnitt bevorzugt ist.

Die ersten und/oder zweiten parallelen Gehäusekonturabschnitte und/oder die Gehäuseumfangskontur können von Seitenflächenabschnitten des Sensorgehäuses gebildet sein. Bevorzugt ist die Bildung als Kantenabschnitte. Bevorzugt ist es, wenn die ersten und/oder zweiten Gehäusekonturabschnitte und/oder eine der Hüllkontur des Erfassungsbereichs entsprechende Gehäusekontur, insbesondere eine Gehäuseumfangskontur, von einer, vorzugsweise umfangsgeschlossenen, Kontureinformung und/oder einer vorzugsweise umfangsgeschlossenen Konturerhebung im Sichtabschnitt, insbesondere in einer Sichtabschnittsstirnseite, gebildet ist, wobei es besonders bevorzugt ist, wenn diese Kontureinformung und/oder Konturerhebung der Umfangskontur des Sichtabschnittes, zumindest näherungsweise, entspricht. Hierdurch können gleichzeitig ansprechende ästhetische Effekte erzielt werden.

Erfindungsgemäß ist die Flächenlinsenanordnung im Sichtabschnitt angeordnet, wobei die Flächenlinsenanordnung bevorzugt die Querschnittsfläche des Einbauabschnittes seitlich, vorzugsweise auf allen Seiten, überragt. Die Anordnung der Flächenlinsenanordnung in dem eine größere Querschnittsfläche als der Einbauabschnitt aufweisenden Sichtabschnitt bietet viele Möglichkeiten in der Anpassung und Ausbildung der Flächenlinsenanordnung zur Erfassung eines im Verhältnis zum Einbauabschnittsquerschnitt vergleichsweise großen Erfassungsbereichs.

Als besonders bevorzugt hat es sich herausgestellt, wenn der Verhältniswert zwischen der Flächenerstreckung des Sichtabschnittes und der parallel dazu angeordneten Querschnittsfläche des Einbauabschnittes zwischen 1,56 und 4,75 vorzugsweise zwischen 2,4 und 4,0, beträgt. Dabei wird unter der Flächenerstreckung des Sichtabschnittes die Flächenerstreckung der axialen Projektionsfläche des Sichtabschnittes verstanden. Ebenso ist es bevorzugt, wenn der Verhältniswert zwischen der Flächenerstreckung der Flächenlinsenanordnung und der parallel dazu angeordneten Querschnittsfläche des Einbauabschnittes zwischen 0,33 und 1,32, vorzugsweise zwischen 0,5 und 0,8, beträgt.

Zur Erzielung eines optimalen ästhetischen Ergebnisses ist die Höhenerstreckung des Sichtabschnittes, gemessen senkrecht zur Anlagefläche, gering. Erfindungsgemäß beträgt sie weniger als 7 mm, noch weiter bevorzugt weniger als 4 mm. Bevorzugt ist die Höhenerstreckung des Sichtabschnittes aus einem Wertebereich zwischen 2 und 4 mm, noch weiter bevorzugt zwischen 2,5 und 3,5 mm, gewählt.

Alternativ zu der oben genannten Höhenerstreckung ist, gemäß der Erfindung, der Verhältniswert zwischen der Höhenerstreckung des Sichtabschnittes und der Gesamthöhe des Gehäuses der Sensorvorrichtung aus einem Wertebereich zwischen 1:10 und 1:30, vorzugsweise zwischen 1:15 und 1:25, gewählt.

Optimale Ergebnisse hinsichtlich der Schaffung eines rechteckigen, vorzugsweise quadratischen Erfassungsbereichs können überraschend dadurch geschaffen werden, wenn die Flächenlinsenanordnung und/oder einzelne, vorzugsweise als Fresnel-Linsen ausgebildete, noch weiter bevorzugt asphärische Linsenabschnitte sechseckig, insbesondere bienenwabenförmig, konturiert sind.

Die Erfindung führt auch auf ein Hausautomationssystem, umfassend mindestens eine erfindungsgemäße, als Bewegungs- und/oder Präsenzmelder ausgebildete Sensorvorrichtung und mindestens einen von dieser bei Detektierung einer Bewegung und/oder einer Präsenz einer Person aktivierbaren Verbraucher, insbesondere einer Leuchte. Ganz besonders bevorzugt umfasst das Hausautomationssystem mehrere derartige, vorzugsweise gleichartige Sensorvorrichtungen, die derart relativ zueinander und beabstandet zueinander angeordnet sind, dass deren Erfassungsbereiche lückenlos, vorzugsweise ohne oder nur mit geringer Überschneidung eine große Bodenfläche abdecken.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine perspektivische Ansicht eines Ausführungsbeispiels eines EinbauPIR-Sensors von schräg hinten,
- Fig. 2:: eine perspektivische Ansicht des Sensors gemäß Fig. 1 von schräg vorne,
- Fig. 3:: eine teilgeschnittene perspektivische Ansicht des Sensors gemäß Fig. 1 und 2 von schräg vorne,
- Fig. 4:: eine teilgeschnittene Ansicht des Sensors gemäß den Fig. 1 bis 3 von schräg hinten,
- Fig. 5:: eine Draufsicht auf ein Kunststoffspritzgussteil mit mehrere FresnelLinsenabschnitte aufweisenden Flächenlinsenanordnung,
- Fig. 6/7:: Diagramme, aus denen die Zuordnung von Erfassungsbereichsabschnitten zu Flächenlinsenabschnitten der Flächenlinsenanordnung ersichtlich ist.

In den Figuren sind gleiche Elemente und Elemente mit der gleichen Funktion mit den gleichen Bezugszeichen gekennzeichnet.

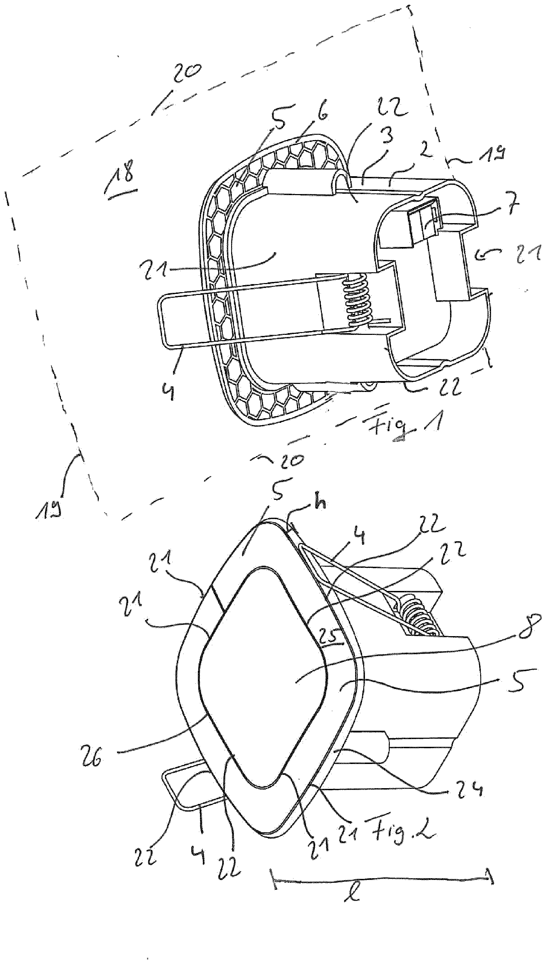

In den Fig. 1 bis 4 ist eine als Bewegungsmelder ausgebildete Einbau-Passiv-Infrarot-Sensorvorrichtung in Form einer Unterputz-PIR-Sensorvorrichtung gezeigt. Die Sensorvorrichtung 1 umfasst ein Gehäuse 2 aus Kunststoffspritzgussteilen. Das Gehäuse 2 ist unterteilt in einen hinteren, langgestreckten Einsatzabschnitt zum Durchstecken durch eine Montageöffnung, beispielsweise in einer abgehängten Decke. Seitlich an dem Einsatzabschnitt befinden sich auf zwei voneinander abgewandten Seiten zwei Federbügel 4, die im montierten Zustand einen außerhalb der Montageöffnung befindlichen Sichtabschnitt 5 des Gehäuses 2 mit einer hinteren Anlagefläche 6 plan gegen die Wand oder die Decke verspannen, wobei sich die Federbügel 4 beispielsweise an der Rückseite der abgehängten Decke abstützen. In einem hinteren stirnseitigen Bereich des Einsatzabschnittes 3 befindet sich eine Anschlussbuchse 7, hier ausgebildet zur Integration in ein KNX-Hausbussystem, wobei über die Anschlussbuchse 7 die Spannungsversorgung der Sensorelektronik erfolgt und auch ein Sensorsignal ausgeleitet werden kann. Alternativ kann der Sensor auch unmittelbar als Schalteinrichtung mit Leistungselektronik ausgebildet werden, um einen Verbraucher in Abhängigkeit der Detektion der Bewegung einer Person ein- oder auszuschalten.

Der Sichtabschnitt 5 ist im Verhältnis zum langgestreckten Einbauabschnitt 3 sehr flach ausgebildet und weist eine geringe Höhenerstreckung h, gemessen senkrecht zur Flächenerstreckung der Anlagefläche 6, auf. Die Höhenerstreckung h beträgt im Ausführungsbeispiel 1,74 mm. Die Höhenerstreckung des gesamten Gehäuses 2 entspricht der Summe aus der Höhenerstreckung h des Einsatzabschnittes und der gleichgerichteten Höhenerstreckung des Einbauabschnittes 3. Die Höhenerstreckung I des Gehäuses beträgt im gezeigten Ausführungsbeispiel 20,78 mm.

Wie sich aus den Fig. 1 bis 4 ergibt, überragt der Sichtabschnitt 5 die Querschnittsfläche des Einsatzabschnittes 3 allseitig. In dem gezeigten Ausführungsbeispiel beträgt die Flächenerstreckung (axiale Projektionsfläche) des Sichtabschnittes 5 4.703 mm² und die Flächenerstreckung der Querschnittsfläche des Einsatzabschnittes beträgt 1.474 mm².

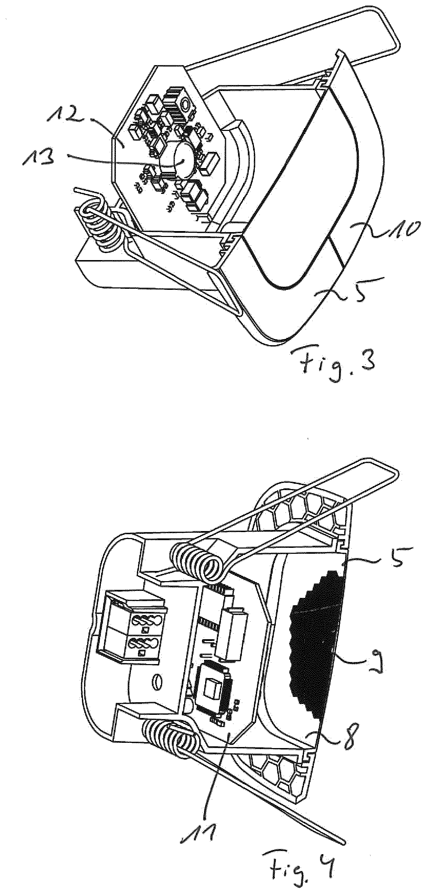

Wie sich insbesondere aus den Schnittdarstellungen gemäß den Fig. 3 und 4 ergibt, ist das Gehäuse 2 mehrteilig ausgebildet und umfasst den einteiligen Einsatzabschnitt 3 sowie den mehrteiligen Sichtabschnitt 5.

Dieser wiederum umfasst ein flaches, zentriert angeordnetes Kunststoffspritzgussteil 8 aus infrarottransparentem Kunststoff, beispielsweise Polyethylen, wobei in dieses Kunststoffspritzgussteil 8, wie sich insbesondere aus Fig. 4 andeutungsweise ergibt, eine Flächenlinsenanordnung 9 eingeformt ist. Umgeben ist das Kunststoffspritzgussteil 8 von einem Rahmenabschnittsteil 10, welches mit dem Kunststoffspritzgussteil und dem Einsatzabschnitt 3 verrastet ist. Das Rahmenabschnittsteil 10 fixiert somit das Kunststoffspritzgussteil 8 am Einsatzteil 3.

Mit Abstand zu und hinter der Flächenlinsenanordnung 9 befindet sich die eigentliche Sensorelektronik 11. Diese umfasst einen auf einer Leiterplatte 12 angeordneten PIR-Sensor 13, auf den die Sichtstrahlen eines Erfassungsbereichs fokussiert werden.

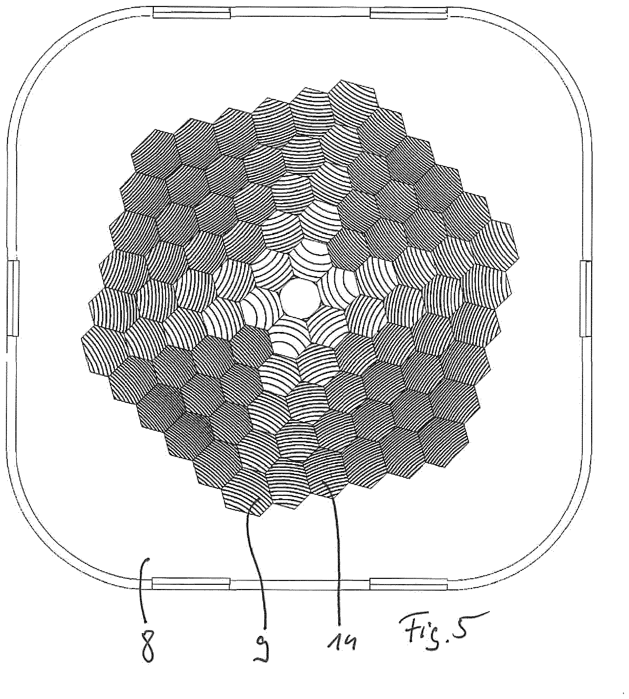

In Fig. 5 ist das die Flächenlinsenanordnung 9 aufweisende Kunststoffspritzgussteil 8 der Fig. 1 bis 4 im Detail gezeigt. Zu erkennen ist die in dem gezeigten Ausführungsbeispiel einundneunzig sechseckige Flächenlinsenabschnitte 14 aufweisende Flächenlinsenanordnung 9, welche ebenfalls eine sechseckige, hier wabenförmige Hüllkontur aufweist. Die Flächenlinsenabschnitte 14 sind als asphärische Fresnel-Linsenabschnitte ausgebildet und derart beschaffen, dass mit diesen, wie im Folgenden erläutert werden wird, ein quadratischer Erfassungsbereich in einer Erfassungsebene überwachbar ist.

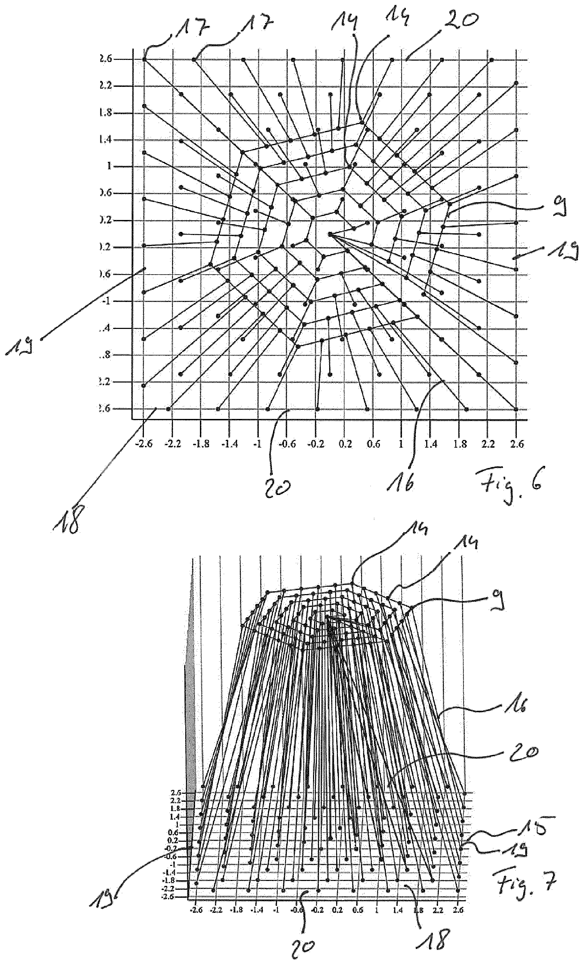

In den Fig. 6 und 7 ist der Zusammenhang zwischen den einzelnen Flächenlinsenabschnitten 14 der Flächenlinsenanordnung 9 und dem Erfassungsbereich, genauer von Erfassungsbereichsabschnitten, dargestellt, und zwar in Fig. 6 in einer zweidimensionalen und in Fig. 7 in einer dreidimensionalen Darstellung, wobei zur Verdeutlichung der Zusammenhänge die Flächenlinsenanordnung 9 übergroß dargestellt ist. In der Darstellung beträgt der Abstand zwischen der Flächenlinsenanordnung 9 und der Erfassungsebene 2,80 m.

Wie erläutert, ist in den Fig. 6 und 7 zunächst die übergroß dargestellte Flächenlinsenanordnung 9 gezeigt, wobei die Flächenlinsenabschnitte 14 zur besseren Verdeutlichung spinnennetzartig miteinander verbunden sind.

In den Darstellungen führen von der parallel zur Flächenlinsenanordnung 9 angeordneten Erfassungsebene 15 Sichtstrahlen 16 zu einzelnen Punkten (Erfassungsbereichsabschnitten) des Erfassungsbereichs. Dies ist eine vereinfachte Darstellung, da von jedem Erfassungsbereichsabschnitt 17 zwei Sichtstrahlenbündel zu den zugehörigen Flächenlinsenabschnitten führen, die diese auf jeweils eine Detektorfläche des PIR-Sensors in an sich bekannter Weise zur Differenzsignalbildung lenkt.

Zu erkennen ist in den Fig. 6 und 7 die quadratische Hüllkontur (umhüllende) des Erfassungsbereichs 18. Dieser besteht in dem gezeigten Ausführungsbeispiel aus zwei parallelen ersten Hüllkonturkanten 19 und zwei rechtwinklig dazu angeordneten parallelen zweiten Hüllkonturkanten 20, die sich in dem gezeigten Ausführungsbeispiel zu einem Quadrat ergänzen.

In Fig. 1 ist der Erfassungsbereich 18 mit seiner quadratischen Hüllkontur und den parallelen ersten Hüllkonturkanten 19 und den dazu rechtwinklig angeordneten zweiten parallelen Hüllkonturkanten 20 dargestellt. An dem in den Fig. 1 und 2 dargestellten Gehäuse 2 finden sich diese ersten und zweiten Hüllkonturkanten 19, 20 als erste und zweite Gehäusekonturabschnitte 21, 22 wieder, und zwar in dem gezeigten Ausführungsbeispielen an mehreren Gehäuseabschnitten.

So werden die ersten parallelen Gehäusekonturabschnitte 21 und die zweiten, hier rechtwinklig zu den ersten Gehäusekonturabschnitten 21 angeordneten Gehäusekonturabschnitte 22 von Umfangskanten des Sichtabschnittes 5 des Gehäuses gebildet, wobei diese Umfangskanten im Übergangsbereich zu einer Umfangsseitenwand 24 des Sichtabschnittes 5 und dessen Stirnseite 25 gebildet sind. Ferner finden sich erste und zweite Gehäusekonturabschnitte 21, 22, die mit den ersten und zweiten Hüllkonturkanten 19, 20 des Erfassungsbereichs 18 korrespondieren, wieder als stirnseitige Kontureinformung 26 im Sichtabschnitt 5. Wesentlich dabei ist, dass die ersten und zweiten Gehäusekonturabschnitte 21, 22 parallel zu den zugehörigen ersten und zweiten Hüllkonturkanten 19, 20 des Erfassungsbereichs 18 ausgerichtet sind. In dem gezeigten Ausführungsbeispiel ist zudem realisiert, dass eine Gehäusekontur, hier die Gehäuseumfangskontur, des Sichtabschnittes 5 zumindest näherungsweise (bis auf die Abrundung der Ecken) der quadratischen Hüllkontur des Erfassungsbereichs 18 entspricht und zu dieser ausgerichtet ist.

Aus Fig. 1 ist zu erkennen, dass zu den ersten und zweiten Hüllkonturkanten korrespondierende parallele erste und zweite Gehäusekonturabschnitte 21, 22 auch am Einbauabschnitt vorgesehen sind und zwar werden die ersten Gehäusekonturabschnitte 21 und die zweiten Gehäusekonturabschnitte 22 von Seitenflächen des bis auf abgerundete Ecken quadratisch konturierten Einsatzabschnittes 3 gebildet. Auch die Gehäuseumfangskontur des Einsatzabschnittes 3 entspricht in dem gezeigten Ausführungsbeispiel näherungsweise (bis auf die gerundeten Ecken) der Hüllkontur des Erfassungsbereichs 18 und ist zu diesem ausgerichtet, indem die korrespondierenden Abschnitte von Gehäusekontur und Hüllkontur des Erfassungsbereichs 18 zueinander parallel ausgerichtet sind.

Zusammenfassend umfasst die Erfindung, gemäß Anspruch 1, eine Einbau-Passiv-Infrarot, PIR, -Sensorvorrichtung mit mindestens einer in einem Gehäuse angeordneten PIR-Sensoreinheit und einer mit Abstand zu der PIR -Sensoreinheit angeordneten Flächenlinsenanordnung, die derart ausgebildet ist, dass die Sensorvorrichtung in einer in einer Parallelebene zur Flächenerstreckung der Flächenlinsenanordnung angeordneten Erfassungsebene einen Erfassungsbereich mit einer derartigen Hüllkontur aufweist, dass durch Aneinandersetzen mehrerer solcher Erfassungsbereiche eine Fläche lückenlos und ohne Überschneidung der Erfassungsbereiche abgedeckt werden kann, wobei das Gehäuse einen in einer Montageöffnung versenkbaren Einbauabschnitt und einen eine Anlagefläche zur äußeren Anlage an einen die Montageöffnung umgebenden Wand- oder Deckenabschnitt anbietenden Sichtabschnitt aufweist, der Sichtabschnitt in einem versenkten Zustand des Gehäuses sichtbar auf der Decke oder Wand verbleibt, die Gehäuseumfangskontur eines Gehäuseabschnitts im verkleinerten Maßstab, zumindest näherungsweise, der Hüllkontur des Erfassungsbereichs in der Erfassungsebene entspricht und die einander entsprechenden Konturabschnitte von Gehäuseabschnitt und Erfassungsbereich zueinander parallel ausgerichtet sind; die Flächenlinsenanordnung im Sichtabschnitt angeordnet ist; die Höhenerstreckung des Sichtabschnittes senkrecht zur Anlagefläche weniger als 7 mm beträgt oder der Verhältniswert zwischen der Höhenerstreckung des Sichtabschnittes und der Gesamthöhe des Gehäuses der Sensorvorrichtung aus einem Wertebereich zwischen 1:10 und 1:30 gewählt ist; und die Hüllkontur des Erfassungsbereichs in der Erfassungsebene rechtwinklig, quadratisch oder wabenförmig ist.

Erfindungsgemäße Weiterbildungen sind in den abhängigen Ansprüchen 2-5 definiert.

### Bezugszeichenliste

- 1: Sensorvorrichtung
- 2: Gehäuse
- 3: Einsatzabschnitt
- 4: Federbügel
- 5: Sichtabschnitt
- 6: Anlagefläche
- 7: Anschlussbuchse
- 8: Kunststoffspritzgussteil
- 9: Flächenlinsenanordnung
- 10: Rahmenabschnitt
- 11: Sensorelektronik
- 12: Leiterplatte
- 13: PIR-Sensor
- 14: Flächenlinsenabschnitte
- 15: Erfassungsebene
- 16: Sichtstrahlen
- 17: Erfassungsbereichsabschnitt
- 18: Erfassungsbereich
- 19: erste Hüllkonturkanten
- 20: zweite Hüllkonturkanten
- 21: erste Gehäusekonturabschnitte
- 22: zweite Gehäusekonturabschnitte
- 24: Umfangsseitenwand
- 25: Stirnseite
- 26: Kontureinformung

## Patentansprüche

1. Einbau-Passiv-Infrarot, PIR, -Sensorvorrichtung mit
mindestens einer in einem Gehäuse (2) angeordneten PIR-Sensoreinheit und
einer mit Abstand zu der PIR -Sensoreinheit angeordneten Flächenlinsenanordnung (9), die derart ausgebildet ist, dass die Sensorvorrichtung (1) in einer in einer Parallelebene zur Flächenerstreckung der Flächenlinsenanordnung angeordneten Erfassungsebene (15) einen Erfassungsbereich (18) mit einer derartigen Hüllkontur aufweist, dass durch Aneinandersetzen mehrerer solcher Erfassungsbereiche (18) eine Fläche lückenlos und ohne Überschneidung der Erfassungsbereiche (18) abgedeckt werden kann, wobei
das Gehäuse (2) einen in einer Montageöffnung versenkbaren Einbauabschnitt (3) und einen eine Anlagefläche (6) zur äußeren Anlage an einen die Montageöffnung umgebenden Wand- oder Deckenabschnitt anbietenden Sichtabschnitt (5) aufweist,
der Sichtabschnitt (5) in einem versenkten Zustand des Gehäuses sichtbar auf der Decke oder Wand verbleibt,
die Gehäuseumfangskontur eines Gehäuseabschnitts im verkleinerten Maßstab, zumindest näherungsweise, der Hüllkontur des Erfassungsbereichs (18) in der Erfassungsebene (15) entspricht und die einander entsprechenden Konturabschnitte von Gehäuseabschnitt und Erfassungsbereich (18) zueinander parallel ausgerichtet sind;
die Flächenlinsenanordnung (9) im Sichtabschnitt (5) angeordnet ist;
die Höhenerstreckung des Sichtabschnittes (5) senkrecht zur Anlagefläche (8) weniger als 7 mm beträgt oder der Verhältniswert zwischen der Höhenerstreckung des Sichtabschnittes (5) und der Gesamthöhe des Gehäuses (2) der Sensorvorrichtung (1) aus einem Wertebereich zwischen 1:10 und 1:30 gewählt ist; und
die Hüllkontur des Erfassungsbereichs (18) in der Erfassungsebene (15) rechtwinklig, quadratisch oder wabenförmig ist.

2. Sensorvorrichtung nach Anspruch 1, wobei
die Hüllkontur des Erfassungsbereichs (18) zwei parallele Hüllkonturkanten (19) aufweist; und
das Gehäuse (2) zwei parallele erste Gehäusekonturabschnitte (21) aufweist, die parallel zu den parallelen ersten Hüllkonturkanten (19) der Hüllkontur des Erfassungsbereichs (18) ausgerichtet sind.

3. Sensorvorrichtung mach Anspruch 2, wobei
die Hüllkontur das Erfassungsbereichs (18) in einer Erfassungsebene (15) zwei parallele zweite Hüllkanten aufweist, die winklig zu den parallelen ersten Hüllkonturkanten (19) angeordnet sind.

4. Sensorvorrichtung nach Anspruch 3, wobei
das Gehäuse (2) zwei parallele zweite Gehäusekonturabschnitte (22) aufweist, die parallel zu den parallelen zweiten Hüllkonturkanten (20) der Hüllkontur des Erfassungsbereichs (18) ausgerichtet sind.

5. Sensorvorrichtung nach einem der vorhergehenden Ansprüche, wobei
der Verhältniswert zwischen der Flächenerstreckung des Sichtabschnittes (5) und der parallel dazu angeordneten Querschnittsfläche des Einbauabschnittes zwischen 1,56 und 4,75 oder zwischen 2,4 und 4,0 beträgt.

## Claims

1. An installation passive infrared (PIR) sensor device with
at least one PIR sensor unit arranged in a housing (2), and
a surface lens arrangement (9) arranged at a distance from the PIR sensor unit, which arrangement is designed such that, in a detecting plane (15) arranged in a parallel plane to the surface extension of the surface lens arrangement, the sensor device (1) has a detecting region (18) with a casing contour which is such that a surface can be covered without gaps and without overlaps by putting together several such detecting regions (18), wherein
the housing (2) has an installation section (3) which can be sunk into a mounting opening and a wall or cover section surrounding a contact surface (6) for externally abutting against a visibility section (5) from which is visible the wall or cover section, and which surrounds the mounting opening,
the visibility section (5) remains visible on the cover or wall in a sunken state of the housing,
the housing perimeter contour of a housing section corresponds, on a smaller scale, at least approximately, to the casing contour of the detecting region (18) in the detecting plane (15) and the contour sections of housing section and detecting region (18) which correspond to one another are aligned parallel to one another;
the surface lens arrangement (9) is arranged in the visibility section (5);
the height extension of the visibility section (5) perpendicular to the contact surface (8) is less than 7 mm or the ratio between the height extension of the visibility section (5) and the overall height of the housing (2) of the sensor device (1) is chosen from a value range between 1:10 and 1:30; and
the casing contour of the detecting region (18) in the detecting plane (15) is rectangular, square or honeycombed.

2. The sensor device according to claim 1, wherein
the casing contour of the detecting region (18) has two parallel casing contour edges (19); and
the housing (2) has two parallel first housing contour sections (21) which are aligned parallel to the parallel first casing contour edges (19) of the casing contour of the detecting region (18).

3. The sensor device according to claim 2, wherein
the casing contour of the detecting region (18) has two parallel second casing edges in a detecting plane (15), which edges are arranged at an angle to the parallel first casing contour edges (19).

4. The sensor device according to claim 3, wherein
the housing (2) has two parallel second housing contour sections (22) which are aligned parallel to the parallel second casing contour edges (20) of the casing contour of the detecting region (18).

5. The sensor device according to one of the preceding claims, wherein
the ratio between the surface extension of the visibility section (5) and the cross-section surface of the installation section, arranged parallel thereto, is between 1.56 and 4.75 or between 2.4 and 4.0.

## Revendications

1. Dispositif capteur, PIR, infrarouge passif encastré avec
au moins une unité capteur PIR disposée dans un boîtier (2)
et
un ensemble lentille plane (9) disposé à distance de l'unité capteur PIR, qui est réalisé de telle manière que le dispositif capteur (1) présente, dans un plan de détection (15) disposé dans un plan parallèle à l'extension de surface de l'ensemble lentille plane, une zone de détection (18) avec un contour d'enveloppe tel qu'une surface peut être recouverte en continu et sans chevauchement des zones de détection (18) en plaçant les unes contre les autres plusieurs zones de détection (18) de ce type, dans lequel
le boîtier (2) présente une section encastrée (3) pouvant être enfoncée dans une ouverture de montage et une section visible (5) offrant une surface d'appui (6) destinée à venir en appui côté extérieur sur une section de mur ou de plafond entourant l'ouverture de montage,
la section visible (5) reste visible sur le plafond ou le mur dans un état enfoncé du boîtier,
le contour périphérique de boîtier d'une section de boîtier correspond à échelle réduite, au moins approximativement, au contour d'enveloppe de la zone de détection (18) dans le plan de détection (15) et les sections de contour correspondant les unes aux autres de la section de boîtier et de la zone de détection (18) sont orientées parallèlement les unes aux autres ;
l'ensemble lentille plane (9) est disposé dans la section visible (5) ;
l'extension verticale de la section visible (5) perpendiculairement à la surface d'appui (8) est inférieure à 7 mm ou le ratio entre l'extension verticale de la section visible (5) et la hauteur totale du boîtier (2) du dispositif capteur (1) est choisi parmi une plage de valeurs entre 1:10 et 1:30 ; et
le contour d'enveloppe de la zone de détection (18) est dans le plan de détection (15) rectangulaire, carré ou de forme alvéolaire.

2. Dispositif capteur selon la revendication 1, dans lequel
le contour d'enveloppe de la zone de détection (18) présente deux arêtes de contour d'enveloppe (19) parallèles ; et
le boîtier (2) présente deux premières sections de contour de boîtier (21) parallèles, qui sont orientées parallèlement aux premières arêtes de contour d'enveloppe (19) parallèles du contour d'enveloppe de la zone de détection (18).

3. Dispositif capteur selon la revendication 2, dans lequel
le contour d'enveloppe de la zone de détection (18) présente dans un plan de détection (15) deux deuxièmes arêtes d'enveloppe parallèles, qui sont disposées selon un angle par rapport aux premières arêtes de contour d'enveloppe (19) parallèles.

4. Dispositif capteur selon la revendication 3, dans lequel
le boîtier (2) présente deux deuxièmes sections de contour de boîtier (22) parallèles, qui sont orientées parallèles aux deuxièmes arêtes de contour d'enveloppe (20) parallèles du contour d'enveloppe de la zone de détection (18).

5. Dispositif capteur selon l'une des revendications précédentes, dans lequel
le ratio entre l'extension de surface de la section visible (5) et la surface de section transversale, disposée parallèlement à celle-ci, de la section encastrée est compris entre 1,56 et 4,75 ou entre 2,4 et 4,0.
